(19) Europäisches Patentamt / European Patent Office / Office européen des brevets

(11) **EP 1 896 710 B1**

(12) **FASCICULE DE BREVET EUROPEEN**

(45) Date de publication et mention
de la délivrance du brevet:
**24.11.2010 Bulletin 2010/47**

(21) Numéro de dépôt: **06778960.2**

(22) Date de dépôt: **21.06.2006**

(51) Int Cl.:
*F02D 41/02* (2006.01)  *F01N 9/00* (2006.01)
*F01N 11/00* (2006.01)

(86) Numéro de dépôt international:
**PCT/FR2006/050615**

(87) Numéro de publication internationale:
**WO 2006/136754 (28.12.2006 Gazette 2006/52)**

(54) **PROCEDE DE CONTROLE DE REGENERATION D'UN FILTRE A PARTICULES**

STEUERUNGSVERFAHREN FÜR DIE REGENERIERUNG EINES PARTIKELFILTERS

REGENERATION CONTROL METHOD FOR A PARTICLE FILTER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.06.2005 FR 0506291**

(43) Date de publication de la demande:
**12.03.2008 Bulletin 2008/11**

(73) Titulaire: **Renault SAS**
**92100 Boulogne Billancourt (FR)**

(72) Inventeurs:
• **RADENAC, Erwan**
**F-78730 Rochefort en Yvelines (FR)**

• **GUYON, Marc**
**F-91290 La Norville (FR)**

(56) Documents cités:
**WO-A-02/27162   DE-A1- 19 923 299**
**FR-A- 2 855 213**

• **KURTH J ET AL: "Automation strategies for a particle filter system for diesel engines" CONTROL APPLICATIONS, 1994., PROCEEDINGS OF THE THIRD IEEE CONFERENCE ON GLASGOW, UK 24-26 AUG. 1994, NEW YORK, NY, USA,IEEE, 24 août 1994 (1994-08-24), pages 127-132, XP010131149 ISBN: 0-7803-1872-2**

EP 1 896 710 B1

**Description**

La présente invention concerne, de façon générale, un procédé de contrôle de régénération de filtre à particules.

Plus particulièrement, l'invention concerne un procédé de contrôle de régénération d'un filtre à particules appartenant à une ligne d'échappement d'un moteur à combustion, comprenant :

- la détermination de donnés de fonctionnement du filtre à particules, ces données étant au moins une température représentative T(t) de la température à l'intérieur du filtre à un instant t ;
- une étape de régénération du filtre consistant à élever la température dudit filtre au-delà d'un premier seuil de température de combustion de suies contenues dans ledit filtre ;
- un calcul d'un paramètre $d_{inst}(t)$ variable dans le temps et représentatif de la quantité d'énergie produite à un instant t par le processus de la régénération.

Afin de diminuer la quantité de particules émises dans l'atmosphère par les moteurs à combustion, il est connu de disposer un filtre à particules sur la ligne d'échappement des gaz brûlés du moteur. Ce filtre à particules doit être régénéré pour conserver ses caractéristiques de filtration, une telle régénération consiste à augmenter la température à l'intérieur du filtre pour entraîner la combustion des suies contenues dans le filtre.

Il a été remarqué que la régénération d'un filtre peut endommager le filtre à particules et être néfaste pour sa longévité.

C'est la raison pour laquelle de nombreux fabricantes de moteurs à explosions équipés d'une ligne d'échappement équipée d'un filtre à particules ont développé diverses solutions visant à contrôleur le processus de régénération du filtre.

Un procédé de contrôle de régénération du type précédemment défini, permettant un tel contrôle de régénération, est par exemple décrit dans le document brevet FR 2855213 et dans KURTH J ET AL: "Automation strategies for a particle filter system for diesel engines", Control Applications, 1994, Proceedings of the Third IEEE Conference on Glasgow, UK, 24-26 Août 1994, Publisher New York, NY, USA, IEEE, 24 Août 1994, pages 127-132, ISBN: 0-7803-1872-2.

Ce document présente un procédé de contrôle la régénération du filtre durant lequel on calcule un paramètre $d_{inst}(t)$ variable dans le temps et représentatif de la quantité d'énergie produite par la régénération. Ce paramètre $d_{inst}(t)$ consiste en un rapport entre la vitesse calculée de combustion des suies $V_r(t)$ en masse de suie brûlée par seconde, divisée par le débit des gaz d'échappement $Q_m(t)$ en masse de gaz d'échappement. En effet plus la vitesse de combustion $V_r(t)$ est rapide et plus la quantité d'énergie produite, à un instant donné t, par la combustion de la suie sera importante. Egalement plus le débit $Q_m(t)$ de gaz à l'échappement est important et plus l'énergie de combustion des suies est évacuée rapidement.

Ainsi l'évolution de ce paramètre calculé $d_{inst}(t)$ est observée pour déterminer s'il est nécessaire ou non d'interrompre le déroulement de la régénération pour éviter un risque de dégradation du filtre.

Dans ce contexte, la présente invention a pour but de proposer un procédé de contrôlé de régénération permettant de réduire le risque d'endommagement du filtre à particules lors de sa régénération.

A cette fin, le procédé de contrôle de régénération de l'invention, par ailleurs conforme à la définition générique qu'en donne le préambule défini précédemment, est essentiellement **caractérisé en ce qu'**il comporte une étape de calcul d'un paramètre pondéré $D_{inst}pond(t)$, ce paramètre pondéré étant au moins partiellement défini par la fonction de $d_{inst}(t) * Gtemp(t)$ où Gtemp (t) est variable dans le temps (t) en fonction de ladite température représentative T(t).

Le fait de calculer un paramètre pondéré $D_{inst}pond(t)$ en multipliant le paramètre $d_{inst}(t)$ par une fonction de Gtemp(t) qui est une fonction variable avec la température représentative T(t) permet de mieux évaluer l'évolution de la régénération pour par exemple prévenir des risques d'endommagement du filtre. En effet la pondération de $d_{inst}(t)$ en fonction de la température T(t) permet de mieux tenir compte de la quantité de calories réellement évaluable du filtre par le débit de gaz.

On peut par exemple faire en sorte que le paramètre $d_{inst}(t)$ soit obtenu par la formule :

$$d_{inst}(t) = \frac{V_r(t)}{Q_m(t)}$$

où $V_r(t)$ est la vitesse de combustion de suies contenues dans le filtre à particules à l'instant t et $Q_m(t)$ est un débit massique des gaz d'échappement estimé ou mesuré à l'instant t. Ce paramètre $d_{inst}(t)$ est particulièrement indiqué en combinaison avec la fonction Gtemp (t) pour observer l'évolution de la régénération et en anticipe le comportement.

On peut également faire en sorte que $d_{inst}(t)$ soit obtenu par la formule :

$$d_{inst}(t) = \frac{m_{suie}(t)\beta * k_0 * \exp\left(-\dfrac{E_a}{RT(t)}\right) * P_{O2}^{\alpha}(t)}{Q_m(t)}$$

où :

- $m_{suie}(t)$ est une estimation de la masse de suie contenue dans le filtre à un instant t ;
- $\beta$ est un ordre partiel de réaction de combustion de la suie ;
- $k_0$ est un facteur de fréquence constant ;
- $E_a$ est une énergie d'activation fonction de l'activité catalytique du système, cette énergie d'activation représentant la sensibilité à la température de la réaction de combustion de suies dans le filtré
- $R$ est la constante des gaz parfais
- $P_{O2}(t)$ est une pression partielle d'oxygène à l'instant t exprimée en unité de pression d'oxygène dans le gaz contenu dans le filtre, c'est-à-dire que $P_{02}(t) = P_T \times X_{02}$ où $P_T$ est la pression totale et $X_{02}$ est la faction molaire d'oxygène ;
- et $\alpha$ est un ordre partiel de réaction pour l'oxygène.

On peut également faire en sorte que que Gtem (t) soit obtenu par l'une quelconque des formules appartenant au groupe constitué de :

- $\text{Gtemp} = \dfrac{T_s}{Te}$ où Ts et Te sont respectivement des températures de sortie et d'entrée de gaz dans le filtre à particules à un instant t ;

\* $\text{Gtemp} = \dfrac{1}{Te}$ ;

\* $\text{Gtemp} = \dfrac{1}{T_s - Te}$ ;

\* Gtemp= $(1 / Te^2)$ ;

\* Gtemp= 1/Ti où Ti est une température interne du filtre à un instant t ;

\* Gtemp= $1/Ti^2$ .

L'ensemble de -ces expressions de Gtemp permet d'évaluer Gtemp en fonction d'une température représentative de l'évolution de la température à l'intérieur du filtre à un instant donné t.

Ainsi, la température représentative peut être Te qui est la température des gaz en amont du filtre à particules, c'est-à-dire à son entré ou Ti qui est la température des gaz à l'intérieur du filtre ou encore Ts qui est la température des gaz à la sorte du filtre.

Dans le cas où $\text{Gtemp} = \dfrac{T_s}{Te}$ , on prend alors en compte un ratio de température qui met en valeur la quantité d'énergie apportée à un instant t par la réaction de régénération. Ce ratio peut également permettre de quantifier la différencie de température Ts -Te aux bornes du filtre pour évaluer le risque de détérioration du filtre due à la différence de température entre entrée et sortie.

Dans le cas de $\text{Gtemp} = \dfrac{1}{Te}$ , on prend en compte la température des gaz à l'entrée du filtre et l'on peut ainsi déterminer la différence entre cette température Te et une température maximale admissible par le filtre. Plus la température Te est importante et moins on pourra évacuer de chaleur produite par la régénération.

Dans le -cas où l'on utilise Ti comme dénominateur dans la fonction représentative Gtemp alors on prend en compte d'une part la chaleur produite par le moteur et d'autre part la chaleur produit par la combustion des suies lors de la régénération.

On peut également faire en sorte que $D_{inst}pond(t) = d_{inst}(t) *$ Gtemp (t). Dans ce cas, seuls $d_{inst}(t)$ et Gtemp (t) sont pris en compte pour observer l'évolution de la régénération.

On peut également faire en sorte que $D_{inst}pond(t)=\sum_{t1}^{t2}d_{inst}(t)*Gtemp(t)dt$ avec t1 et t2 sont les bornes d'un intervalle de temps de durée fixe et glissant dans le temps.

Grâce à cette fonction on prend en compte l'évolution dans le temps de $d_{inst}(t)$ et de Gtemp(t) en calculant la somme de leurs produits instantanés à des instants t sur un intervalle de temps compris entre t1 et t2 où t1 et t2 sont des valeurs glissantes.

On peut également faire en sorte que $D_{inst}pond(t)$ soit égal à la dérivée dans le temps t de $d_{inst}(t)*Gtemp(t)$.

Dans ce cas on calcul la pente dans le temps de la courbe définie par $d_{inst}(t)*Gtemp(t)$. Plus cette pente est importante et plus le risque d'endommager le filtre est important car cela veut dire qu'il est soumis à des variations de chaleur et de température importantes sur des intervalles de temps très courts.

On peut également faire en sorte que si le paramètre pondéré calculé $D_{inst}pond(t)$ est :

- inférieur à une première valeur seuil, on émet un signal de régénération contrôlée et/ou ;
- supérieur à ladite première valeur seuil et inférieur à une seconde valeur seuil, on émet un premier signal de risque de dégradation du filtre et/ou ;
- supérieur à ladite seconde valeur seuil, on émet un signal régénération non contrôlée.

En fixant des valeurs seuls prédéfinies et en comparant à ces valeurs avec le cratère $D_{inst}pond(t)$ calculé tel que décrit précédemment, on peut alors émettre un signal indiquant de façon schématique s'il y a un risque plus ou moins important d'endommagement du filtre.

On peut également faire en sorte que le procédé comporte une étape d'arrêt de la régénération consistant à interrompre la régénération si le paramètre pondéré calculé $D_{inst}pond(t)$ est supérieur à une valeur seuil d'arrêt prédéterminée.

Cette valeur seuil d'arrêt prédéterminée est préférentiellement comprise entre les première et seconde valeurs seuils et peut être égale à la première valeur seuil.

Cette caractéristique permet de réduire le risque de dégradation du filtre à particules par une perte de contrôle de la régénération qui se traduit par une surchauffe et/ou une augmentation brutale et non contrôlable de pression/ température à l'intérieur du filtre.

On peut également faire en sorte que l'on mémorise dans une mémoire des valeurs prises dans le temps t par le paramètre pondéré calculé $D_{inst}pond(t)$.

Cette mémorisation permet d'avoir un historique représentatif du fonctionnement du filtre à particules. Un tel historique permet d'avoir une indication sur le niveau d'usure du filtre à particules et éventuellement sur le temps moyen d'utilisation du filtre avant dysfonctionnement.

D'autres caractéristiques et avantages de l'invention ressortiront clairement de la description qui en est faite ci-après, à titre indicatif et nullement limitatif, en référence aux dessins annexés, dans lesquels:

la figure 1 représente un dispositif adapté pour la mise en oeuvre du procédé de l'invention ;
les figures 2 à 4 représentant des graphiques d'évolution de paramètres de la ligne d'échappement en fonction du temps, la figure 2 correspondant à une régénération normale, la figure 3 représentant une régénération de transition et la figure 4 représentant une régénération incontrôlée avec risque d'endommagement du filtre à particules.

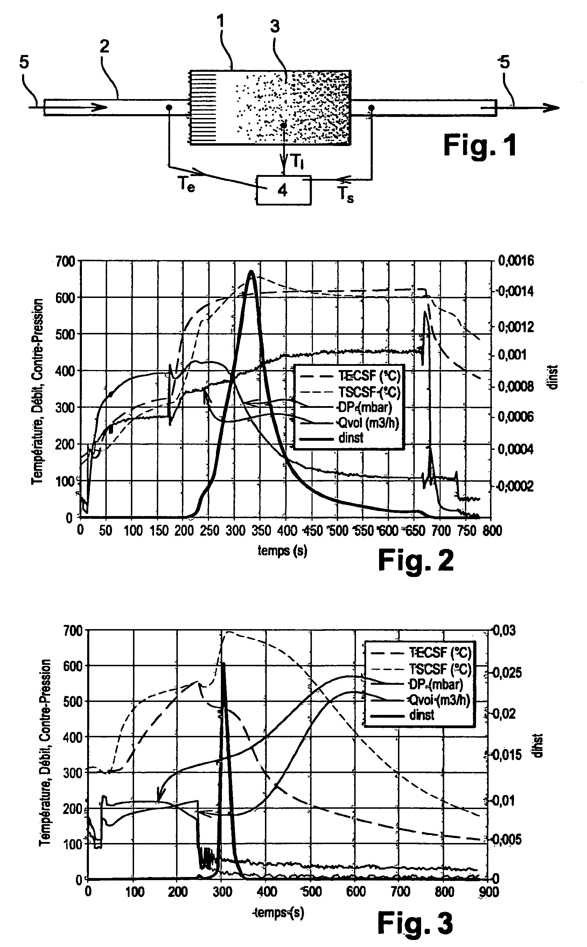

En référence à la figure 1, la ligne d'échappement 2 est reliée à un moteur (non représenté) qui alimente la ligne en gaz brûlés 5.

Le filtre 1 est chargé progressivement en particules 3 portées avec les gaz brûlés.

Un calculateur 4 est relié à des capteurs permettant de collecter des données sur le filtre à particules 1. Ici, les données mesurées sont la température d'entrée des gaz en aval du filtre, la température interne Ti des gaz dans le filtre et la température de sortie des gaz du filtre Ts. Ces paramètres de températures sont collectés par trois capteurs distincts reliés au calculateur 4.

D'autres paramètres sont également mesurés ou estimés et sont transmis au calculateur 4. De tels paramètres mesurés ou estimés sont le débit massique de gaz d'échappement provenant du moteur, la pression partielle en oxygène, la masse de suie dans le filtre à particules.

A l'aide de ces paramètres, le calculateur génère un paramètre $d_{inst}(t)$ qui est représentatif de l'évolution de la régénération.

Ce paramètre $d_{inst}(t)$ est un rapport à chaque instant t de Vr(t) vitesse de combustion de la suie qui est la masse de suie brûlée à un instant t (par exemple des grammes par seconde ou des moles par seconde) divisé par le débit massique $Q_m(t)$ de gaz brûlés provenant du moteur et transitant par le filtre.

Plus la quantité de gaz brûlés circulait est importante et plus la quantité de chaleur pouvant être évacuée du filtre sera importante, le paramètre $d_{inst}(t)$ est donc minimisé par le débit massique $Q_m(t)$.

$Q_m(t)$ est généralement estimé à partir d'une mesure de la quantité d'air admise à un instant t dans le moteur et à partir de la quantité de carburant injectée dans le moteur. L'unité de $Q_m(t)$ est la masse de suie brûlée par unité de temps soit le Kg/s.

Ce ratio $d_{inst}(t)$ permet donc d'indiquer quelle est la capacité d'évacuation de chaleur hors du filtre à un instant t.

Grâce à l'invention, ce ratio est pondéré en calculant un paramètre pondéré $D_{inst}pond(t)$, défini par la fonction de $d_{inst}(t) * Gtemp (t)$ où $Gtemp (t)$ est variable dans le temps (t) en fonction de la température représentative $T(t)$, cette température représentative étant par exemple la température d'entrée des gaz du filtre Te et/ou la température Ti des gaz dans le filtre et/ou la température de sortie des gaz du filtre Ts.

En effet la pondération de $d_{inst}(t)$ à un instant t en fonction d'un paramètre de température permet de mieux visualiser l'évolution de la régénération du filtre.

Pour ce calcul de paramètre pondéré $D_{inst}pond(t)$, on utilise la formule :

$$V_r(t)\Delta H = Q_m(t)Cp_{ex}\big(Te(t) - Ts\ (t)\big)$$

où $Cp_{ex}$ est la -capacité calorifique des gaz d'échappement exprimée en Kelvins par moles et $\Delta H$ est l'enthalpie massique de combustion des suies exprimée en joules par kelvin par mole de suie.

On utilise également la formules :

$$\Delta T(t) = K\frac{V_r(t)}{Q_m(t)} \quad \text{avec} \quad K = \frac{\Delta H(t)}{Cp_{ex}}$$

où K est une constante.
et

$$d_{inst}(t) = \frac{V_r(t)}{Q_m(t)} = \frac{m_{suie}(t)_\beta * k_0 * \exp\left(-\frac{E_a}{RT(t)}\right) * P_{O2}^a(t)}{Q_m(t)}$$

ici la masse de suie dans le filtre $m_{suie}(t)$ est exprimée en g et est une valeur estimée par le calculateur 4. Cette masse peut être estimée par :

- l'analyse de la quantité de carburant consommée par le moteur, et/ou
- par l'analyse de la contre pression aux bornes du filtre qui est une indication sur le colmatage du filtre par la suie et donc une estimation indirecte de la masse de suie dans le filtre.

$\beta$ est l'ordre partiel de réaction de la suie et est obtenu par essais en laboratoire.

$k_0$ est le facteur de fréquence ou facteur pré exponentiel constant.

$E_a$ est l'énergie d'activation qui est fonction de l'activité catalytique du système. Cette énergie représente la sensibilité à la températures de la réaction carbone + oxygène $\rightarrow$ CO2.

$E_a$ est exprimée en Joules par mole de suie.

$R$ est la constante des gaz parfait qui est d'environ 8.314.

$T(t)$ est la température dans le filtre à l'instant t en Kelvins. Cette température $T(t)$ est la température interne aussi appelée Ti.

$P_{O2}$ (t) est la pression partielle de l'oxygène à l'instant t et représente la quantité d'oxygène dans les gaz brûlés 5 à l'entrée du filtre. Cette quantité est mesurée par un capteur ou estimé à partir des paramètres moteur.

$\alpha$ est un ordre partiel de réaction pour 1'-oxygène.

Pour calculer $D_{inst}pond(t)$, on utilise une fonction dans laquelle $D_{inst}pond(t)$ est exprimé à l'aide de $d_{inst}(t)$ et $Gtemp (t)$.

Pour cela, $Gtemp (t)$ est choisi parmi :

* Gtemp $= \dfrac{T_s}{Te}$ où Ts et Te sont respectivement des températures de sortie et d'entrée de gaz dans le filtre à particules à un instant t ou ;

* Gtemp $= \dfrac{1}{Te}$ ou ;

* Gtemp$= \dfrac{1}{T_s - Te}$ ou ;

* Gtemp= (1 / Te$^2$) ou ;
* Gtemp= 1/Ti où Ti est une température interne du filtre à un instant t, ou ;
* Gtemp= 1/Ti$^2$ .

$D_{inst}pond(t)$ peut être calculé :

- soit par $D_{inst}pond(t) = d_{inst}(t) *$ Gtemp (t) ;

- soit par $D_{inst}\,pond(t) = \sum_{t1}^{t2} d_{inst}(t) *$ Gtemp (t) dt ;

- soit par la dérivée dans le temps t de $d_{inst}(t)*$Gtemp(t).

Préférentiellement on exprimée $D_{inst}pond(t) = d_{inst}(t) *$ Ti (t) où Ti est la température interne du gaz dans le filtre.

En effet, ce dernier paramètre pondère est extrêmement représentatif des conditions de fonctionnement du filtre.

La figure 2 illustré l'évolution de paramètres dans le cas d'une régénération contrôlée. Ici, $d_{inst}(t)$ reste égal à 0 tant que la régénération n'est pas déclenchée. Une fois la régénération déclenchée, $d_{inst}(t)$ augmente jusqu'à atteindre une valeur maximale de 0.0016. Cette augmentation de $d_{inst}(t)$ se produite sur un intervalle de temps de près de 150 seconde et cette valeur maximale de $d_{inst}(t)$ indique que la régénération est contrôlée. Dans le même temps la température de sortie des gaz du filtre augmente de près de 100° Celsius jusqu'à atteindre 660°C. Sur ce même intervalle de temps la pression différentielle entre l'entrée et la sortie du filtre exprimée en millibars chute, alors que le volume débit de gaz circulant dans le filtre augmente. Ce dernier point indique que le filtre se dé colmate progressivement.

Tant que les valeurs de $d_{inst}(t)$ sont inférieures à 0.02, ce qui est ici le cas pour la figure 2, alors la régénération est contrôlée et il n'y a pas de danger d'endommagement du filtre a particules.

Lorsque les valeurs de $d_{inst}(t)$ sont supérieures à 0.02 et inférieures à 0.03, ce qui est le cas pour la figure 3, alors il y a un risque de perte de contrôle de la régénération du filtre et les niveaux thermique peuvent s'avérer trop élevés (proche de 700°C). Dans ce cas, il est souvent nécessaire d'intervenir par des réglages moteur pour interrompre ou réguler la régénération en cours.

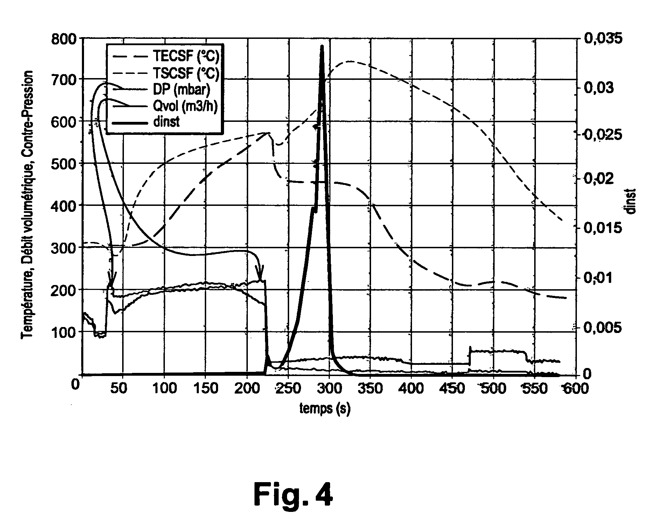

Lorsque les valeurs de $d_{inst}(t)$ sont supérieures à 0.03, ce qui est le cas sur la figure 4, on sait que la régénération n'est plus contrôlable et il y a un risque important de détérioration du filtre à particules.

En effet plus le paramètre $d_{inst}(t)$ augmente et plus la réaction se déroulant dans le filtre est violente.

Ainsi, dans le cas de la figure 4 $d_{inst}(t)$ passe de 0 ) -0.034 en moins de 100 secondes. Dans le même temps la température des gaz à la sortie du filtre Ts augmente dangereusement et passe la barre de 700 degrés jusqu'à atteindre 70°C.

Grâce à l'invention, il est donc possible de pondérer $d_{inst}(t)$ pour faciliter la lecture de la réaction de régénération et ainsi éviter de se retrouver dans levas de la figure 4.

**Revendications**

1. Procédé de contrôlée de régénération d'un filtre à particules appartenant à une ligne d'échappement d'un moteur à combustion, comprenant :

   - la détermination de données de fonctionnement du filtre à particules, ces données étant au moins une température représentative T(t) de la température à l'intérieur du filtre à un instant t ;
   - une étape de régénération du filtre consistait à élever la température dudit filtre au-delà d'un premier seuil de température de combustion de suies contenues dans ledit filtre ;
   - un calcul d'un paramètre $d_{inst}(t)$ variable dans le temps et représentatif de la quantité d'énergie produite à un instant t par le processus de la régénération ;

**caractérisé en ce qu'**il comporte une étape de calcul d'un paramètre pondéré $D_{inst}pond(t)$, ce paramètre pondéré étant au moins partiellement défini par la fonction de $d_{inst}(t)$ * Gtemp (t) où Gtemp (t) est variable dans le temps (t) en fonction de ladite température représentative T (t).

2. Procédé selon la revendication 1, **caractérisé en ce que** le paramètre $d_{inst}(t)$ est obtenu par la formulé :

$$d_{inst}(t) = \frac{V_r(t)}{Q_m(t)}$$

où $V_r(t)$ est la vitesse de combustion de suies contenues dans le filtre à particules à l'instant t et $Q_m(t)$ est un débit massique des gaz d'échappement estimé ou mesuré à l'instant t.

3. Procédé selon l'une quelconque des revendications 1 ou 2, **caractérisé en ce que** $d_{inst}(t)$ est obtenu par la formule :

$$d_{inst}(t) = \frac{m_{suie}(t)\beta * k_0 * \exp\left(-\frac{E_a}{RT(t)}\right) * P_{O2}^{\alpha}(t)}{Q_m(t)}$$

où :

- $m_{suie}(t)$ est une estimation de la masse de suie convenue dans le filtre à un instant t ;
- $\beta$ est un ordre partiel de réaction de combustion de la suie ;
- $k_0$ est un facteur de fréquence contant ;
- $E_a$ est une énergie d'activation fonction de l'activité catalytique du système, cette énergie d'activation représentant la sensibilité à la température de la réaction de combustion de suies dans le filtre ;
- $R$ est la constante des gaz parafait ;
- $P_{O2}(t)$ est une pression partielle d'oxygène à l'instant t exprimée en pourcentage massique d'oxygène dans le gaz contenu dans le filtre à l'instant t ;
- et $\alpha$ est un ordre partiel de réaction pour l'oxygène.

4. Procédé selon l'une quelconque des revendications 1 à 3, **caractérisé en ce que** Gtemp (t) est obtenu par l'une quelconque des formules appartenant au groupe constitué de :

- Gtemp $= \dfrac{T_s}{Te}$ où Ts et Te sont respectivement des températures de sortie et d'entrée de gaz dans le filtre à particules à un instant t ;

- Gtemp $= \dfrac{1}{Te}$ ;

- Gtemp $= \dfrac{1}{T_s - Te}$ ;
- Gtemp= $(1 / Te^2)$ ;
- Gtemp= $1/Ti$ où Ti est une température interne du filtre à un instant t ;
- Gtemp= $1/Ti^2$ .

5. Procédé selon l'une quelconque des revendications 1 à 4, **caractérisé en ce que** $D_{inst}pond(t) = d_{inst}(t)$ * Gtemp (t).

6. Procédé selon l'une quelconque des revendications 1 à 4, **caractérisé en ce que**
$$D_{inst}pond(t) = \sum_{t1}^{t2} d_{inst}(t) * Gtemp(t)\, dt$$ où t1 et t2 sont les bornes d'un intervalle de temps de durée fixe et glissant dans le temps.

7. Procédé selon l'une quelconque des revendications 1 à 4, **caractérisé en ce que** $D_{inst}pond(t)$ est égal à la dérivée dans le temps t de $d_{inst}$(t)*Gtemp(t).

8. Procédé selon l'une quelconque des revendications 1 à 7, **caractérisé en ce que** si le paramètre pondéré calculé $D_{inst}pond(t)$ est :

   - inférieur à une première valeur seuil, on émet un signal de régénération contrôlée et/ou ;
   - supérieur à ladite première valseur seuil et inférieur à une seconde valeur seuil, on émet un premier signal de risque de dégradation du filtre et/ou ;
   - supérieur à ladite seconde valeur seuil, on émet un signal régénération non contrôlée.

9. Procédé selon l'une quelconque des revendications 1 à 8, **caractérisé en ce qu'**il comporte une étape d'arrêt de la régénération consistant à interrompre la régénération si le paramètre pondéré calculé $D_{inst}pond(t)$ est supérieur à une valeur seuil d'arrêt prédéterminée.

10. Procédé selon l'une quelconque des revendications 1 à 9, **caractérisé en ce que** l'on mémorise dans une mémoire des valeurs prises dans le temps t par le paramètre pondéré calculé $D_{inst}pond(t)$.

**Claims**

1. Method for controlling the regeneration of a particulate filter belonging to an exhaust line of an internal combustion engine, comprising:

   - the determination of particulate filter operating data, these data being at least a temperature $T(t)$ representative of the temperature inside the filter at a time $t$;
   - a step of regenerating the filter, consisting in raising the temperature of said filter above a first temperature threshold for combustion of soot contained in said filter;
   - the calculation of a parameter $d_{inst}(t)$ that can vary over time and is representative of the amount of energy produced at a time $t$ by the regeneration process,

   **characterized in that** it includes a step of calculating a weighted parameter $D_{inst}wt(t)$, this weighted parameter being at least partly defined by the function $d_{inst}(t) \times Gtemp(t)$ where $Gtemp(t)$ is variable in time $(t)$ as a function of said representative temperature $T(t)$.

2. Method according to Claim 1, **characterized in that** the parameter $d_{inst}(t)$ is obtained by the formula:

$$d_{inst}(t) \;=\; \frac{V_r(t)}{Q_m(t)}$$

   where $v_r(t)$ is the rate of combustion of soot contained in the particulate filter at the time $t$ and $Q_m(t)$ is an estimated or measured exhaust gas mass flow rate at the time $t$.

3. Method according to either of Claims 1 and 2, **characterized in that** $d_{inst}(t)$ is obtained by the formula:

$$d_{inst}(t) \;=\; \frac{m_{soot}(t)_\beta \,\times\, k_0 \,\times\, exp\left(\dfrac{E_a}{RT(t)}\right) \times P_{O_2}^{\alpha}(t)}{Q_m(t)}$$

   where:

   - $m_{soot}(t)$ is an estimate of the mass of soot contained in the filter at a time $t$;
   - $\beta$ is a partial order of reaction for soot combustion;
   - $k_0$ is a constant frequency factor;

- $E_a$ is an activation energy dependent on the catalytic activity of the system, this activation energy representing the sensitivity to the temperature of the soot combustion reaction in the filter;
- $R$ is the perfect gas constant;
- $P_{O2}(t)$ is an oxygen partial pressure at the time $t$ expressed as a mass percentage of oxygen in the gas contained in the filter at the time $t$; and
- $\alpha$ is a partial order of reaction for oxygen.

**4.** Method according to any one of Claims 1 to 3, **characterized in that** $Gtemp(t)$ is obtained by any one of the formulae belonging to the group consisting of:

- $Gtemp = T_s/T_e$ where $T_s$ and $T_e$ are gas outlet and inlet temperatures, respectively, in the particulate filter at a time $t$;
- $Gtemp = 1/T_e$;
- $Gtemp = 1/(T_s-T_e)$;
- $Gtemp = (1/T_e^2)$;
- $Gtemp = 1/T_i$, where $T_i$ is an internal temperature of the filter at a time $t$; and
- $Gtemp = 1/T_i^2$.

**5.** Method according to any one of Claims 1 to 4, **characterized in that** $D_{inst}wt(t) = d_{inst}(t) \times Gtemp(t)$.

**6.** Method according to any one of Claims 1 to 4, **characterized in that** $D_{inst}wt(t) = \sum_{t1}^{t2} d_{inst}(t) \times Gtemp(t)\, dt$, where $t1$ and $t2$ are the limits of a time interval of fixed duration and sliding over time.

**7.** Method according to any one of Claims 1 to 4, **characterized in that** $D_{inst}wt(t)$ is equal to the derivative with respect to time $t$ of $d_{inst}(t) \times Gtemp(t)$.

**8.** Method according to any one of Claims 1 to 7, **characterized in that** if the calculated weighted parameter $D_{inst}wt(t)$ is:

- below a first threshold value, a controlled regeneration signal is emitted; and/or
- above said first threshold value and below a second threshold value, a first filter degradation risk signal is emitted; and/or
- above said second threshold value an uncontrolled regeneration signal is emitted.

**9.** Method according to any one of Claims 1 to 8, **characterized in that** it includes a step of stopping the regeneration, consisting in interrupting the regeneration if the calculated weighted parameter $D_{inst}wt(t)$ is above a predetermined stop threshold value.

**10.** Method according to any one of Claims 1 to 9, **characterized in that** values taken over time $t$ by the calculated weighted parameter $D_{inst}wt(t)$ are stored in a memory.

**Patentansprüche**

**1.** Verfahren zur Überwachung der Regeneration eines Partikelfilters, der zu einer Auspuffanlage eines Verbrennungsmotors gehört, das enthält:

- die Bestimmung von Betriebsdaten des Partikelfilters, wobei diese Daten mindestens eine für die Temperatur im Inneren des Filters in einem Zeitpunkt t repräsentative Temperatur T(t) sind;
- einen Schritt der Regeneration des Filters, der darin besteht, die Temperatur des Filters über einen ersten Temperaturschwellwert der Abbrennung von im Filter enthaltenen Rußen zu erhöhen;
- eine Berechnung eines Parameters $d_{inst}(t)$, der zeitlich variabel und für die Energiemenge repräsentativ ist, die in einem Zeitpunkt t vom Regenerationsprozess erzeugt wird;

**dadurch gekennzeichnet, dass** es einen Schritt der Berechnung eines gewichteten Parameters $D_{inst}pond(t)$ aufweist, wobei dieser gewichtete Parameter zumindest teilweise durch die Funktion von $d_{inst}(t) * Gtemp(t)$ definiert wird, wobei Gtemp(t) in der Zeit (t) in Abhängigkeit von der repräsentativen Temperatur T(t) variabel ist.

**2.** Verfahren nach Anspruch 1, **dadurch gekennzeichnet, dass** der Parameter $d_{inst}(t)$ erhalten wird durch die Formel:

$$d_{inst}(t) = \frac{V_r(t)}{Q_m(t)}$$

wobei $V_r(t)$ die Abbrenngeschwindigkeit von im Partikelfilter im Zeitpunkt t enthaltenen Rußen und $Q_m(t)$ ein Massenstrom der Abgase ist, der im Zeitpunkt t geschätzt oder gemessen wird.

**3.** Verfahren nach einem der Ansprüche 1 oder 2, **dadurch gekennzeichnet, dass** $d_{inst}(t)$ erhalten wird durch die Formel:

$$d_{inst}(t) = \frac{m_{Ruß}(t)_\beta \, k_0 * \exp\left(\dfrac{E_\alpha}{RT(t)}\right) * P_{O2}^\alpha(t)}{Q_m(t)}$$

wobei

- $m_{Ruß}(t)$ eine Schätzung der in einem Zeitpunkt t im Filter enthaltenen Rußmasse ist;
- $\beta$ eine Teilordnung der Abbrennreaktion des Rußes ist;
- $k_0$ ein konstanter Frequenzfaktor ist;
- $E_\alpha$ eine Aktivierungsenergie in Abhängigkeit von der katalytischen Aktivität des Systems ist, wobei diese Aktivierungsenergie die Temperaturempfindlichkeit der Abbrennreaktion von Rußen im Filter darstellt;
- R die ideale Gaskonstante ist;
- $P_{O2}(t)$ ein Sauerstoffpartialdruck im Zeitpunkt t ausgedrückt in Sauerstoff-Gewichtsprozent in dem im Filter im Zeitpunkt t enthaltenen Gas ist;
- und $\alpha$ eine Teilordnung der Reaktion für den Sauerstoff ist.

**4.** Verfahren nach einem der Ansprüche 1 bis 3, **dadurch gekennzeichnet, dass** Gtemp(t) durch eine beliebige der Formeln erhalten wird, die zu der Gruppe gehören, die besteht aus:

- $\texttt{Gtemp} = \dfrac{Ts}{Te}$, wobei Ts und Te Ausgangs- bzw. Eingangstemperaturen von Gas im Partikelfilter in einem Zeitpunkt t sind;

- $\texttt{Gtemp} = \dfrac{1}{Te}$;

- $\texttt{Gtemp} = \dfrac{1}{Ts - Te}$;

- Gtemp = $(1/Te^2)$ ;
- Gtemp = 1/Ti, wobei Ti eine Innentemperatur des Filters in einem Zeitpunkt t ist;
- Gtemp = $1/Ti^2$.

**5.** Verfahren nach einem der Ansprüche 1 bis 4, **dadurch gekennzeichnet, dass** gilt $D_{inst}$pond(t) = $d_{inst}(t) * $ Gtemp (t).

**6.** Verfahren nach einem der Ansprüche 1 bis 4, **dadurch gekennzeichnet, dass** gilt

$$D_{inst}\text{pond}(t) = \sum_{t1}^{t2} d_{inst}(t) + \text{Gtemp}(t)\,dt,$$ wobei t1 und t2 die Grenzen eines Zeitintervalls fester Dauer und zeitlich gleitend sind.

**7.** Verfahren nach einem der Ansprüche 1 bis 4, **dadurch gekennzeichnet, dass** $D_{inst}$pond(t) gleich der Ableitung in der Zeit t von $d_{inst}$(t) * Gtemp(t) ist.

**8.** Verfahren nach einem der Ansprüche 1 bis 7, **dadurch gekennzeichnet, dass**, wenn der berechnete gewichtete Parameter $D_{inst}$pond(t):

- niedriger als ein erster Schwellwert ist, ein Signal überwachter Regeneration gesendet wird, und/oder;
- höher als der erste Schwellwert und niedriger als ein zweiter Schwellwert ist, ein erstes Signal der Gefahr einer Verschlechterung des Filters gesendet wird, und/oder;
- höher als der zweite Schwellwert ist, ein Signal nicht überwachter Regeneration gesendet wird.

**9.** Verfahren nach einem der Ansprüche 1 bis 8, **dadurch gekennzeichnet, dass** es einen Schritt des Anhaltens der Regeneration aufweist, der darin besteht, die Regeneration zu unterbrechen, wenn der berechnete gewichtete Parameter $D_{inst}$pond{t) höher ist als ein vorbestimmter Anhalte-Schwellwert.

**10.** Verfahren nach einem der Ansprüche 1 bis 9, **dadurch gekennzeichnet, dass** in einem Speicher Werte gespeichert werden, die in der Zeit t von dem berechneten gewichteten Parameter $D_{inst}$pond(t) angenommen werden.

Fig. 1

Fig. 2

Fig. 3

**Fig. 4**

**RÉFÉRENCES CITÉES DANS LA DESCRIPTION**

**Documents brevets cités dans la description**

- FR 2855213

**Littérature non-brevet citée dans la description**

- **KURTH J et al.** Automation strategies for a particle filter system for diesel engines. *Control Applications, 1994, Proceedings of the Third IEEE Conference on Glasgow,* 24 Août 1994, ISBN 0-7803-1872-2, 127-132